# EUROPEAN PATENT SPECIFICATION

(11) **EP 3 176 077 B1**
(45) Date of publication and mention of the grant of the patent: **06.11.2019**
(21) Application number: 16188072.9
(22) Date of filing: 09.09.2016
(51) Int. Cl.: B64C 9/24, B64C 3/28

(54) **LEADING EDGE HIGH-LIFT DEVICE**
VORDERKANTENAUFTRIEBSERHÖHENDE VORRICHTUNG
DISPOSITIF HYPERSUSTENTATEUR DE BORD D'ATTAQUE

(30) Priority: 01.12.2015 US 201514956006
(43) Date of publication of application: 07.06.2017
(73) Proprietor: The Boeing Company, Chicago, IL 60606-1596 (US)
(72) Inventor: Kawai, Ronald Tatsuji, Huntington Beach, CA 14900 (US); Tompkins, Daniel Michael, Cypress, CA 90630 (US); Liebeck, Robert Hauschild, Irvine, CA 926032 (US); Elmer, Kevin Robert, Foothills Ranch, CA 92610 (US); Dickey, Eric David, Long Beach, CA 90803 (US)
(74) Representative: Witte, Weller & Partner Patentanwälte mbB

(56) References cited:
- GB-A- 419 559
- US-A1- 2003 226 936
- US-A1- 2010 084 508
- US-A1- 2010 288 888
- US-A1- 2012 097 791
- US-A1- 2012 104 180
- US-A1- 2012 261 517
- US-A1- 2012 292 454

## Description

### TECHNICAL FIELD

The present disclosure relates generally to leading edge high-lift devices and, more particularly, relates to a leading edge high-lift device for an aircraft wing.

### BACKGROUND

Some modern day aircraft wings utilize leading edge high-lift devices, which may be deployed to increase lifting capacity. Common leading edge high-lift devices that may be utilized include, but are not limited to, slotted leading edge slats which have a high wing lift coefficient associated therewith. While effective, such slotted leading edge slats may generate flyover noise that propagates to the ground during flight.

Document US 2010/0288888 A1 shows a blade seal comprising a flexible member having a relatively thick edge opposite a relatively thin edge, and an actuator at least partially embedded in the flexible member for actively deflecting the thin edge with respect to the thick edge upon activation of the actuator. The blade seal may be fixed to an aerodynamic trailing edge of either a fixed aerofoil portion or a flight control surface of an aerofoil for sealing between the fixed aerofoil portion and the flight control surface.

Document US 2012/0261517 A1 shows a multi-element airfoil system including an airfoil element having a leading edge region and a skin element coupled to the airfoil element. A slat deployment system is coupled to the slat and the skin element, and is capable of deploying and retracting the slat and the skin element. The skin element substantially fills the lateral gap formed between the slat and the airfoil element when the slat is deployed. The system further includes an uncoupling device and a sensor to remove the skin element from the gap based on a critical angle-of-attack of the airfoil element. The system can alternatively comprise a trailing edge flap, where a skin element substantially fills the lateral gap between the flap and the trailing edge region of the airfoil element. In each case, the skin element fills a gap between the airfoil element and the deployed flap or slat to reduce airframe noise.

Document US 2012/0097791 A1 shows a slat cove filler utilized to reduce airframe noise resulting from deployment of a leading edge slat of an aircraft wing. The slat cove filler is preferably made of a super elastic shape memory alloy, and the slat cove filler shifts between stowed and deployed shapes as the slat is deployed. The slat cove filler may be configured such that a separate powered actuator is not required to change the shape of the slat cove filler from its deployed shape to its stowed shape and vice-versa. The outer contour of the slat cove filler preferably follows a profile designed to maintain accelerating flow in the gap between the slat cove filler and wing leading edge to provide for noise reduction.

Document US 2012/0292454 A1 shows a high lift system provided for an aircraft. The high lift system includes, but is not limited to a lift flap arranged on a wing and coupled to the wing so as to be movable relative to the wing, between a retracted position and at least one extended position. In the retracted position the lift flap rests against the wing, and in an extended position forms an air gap to the wing. The lift flap directed towards its trailing edge comprises at least one region of variable curvature, which region in an extended position of the lift flap extends towards the wing.

Document US 2010/0084508 A1 shows a high-lift devices, wings, and noise reduction structures for the high-lift devices capable of suppressing the occurrence of aerodynamic noise while restricting an increase in airframe weight. A high-lift device includes: a slat main body that is disposed so as to be able to extend from and retract into a main wing; a concave part that is formed on the slat main body at a location that faces the main wing, so as to be able to accommodate at least a part of a leading edge of the main wing;; and an airflow control part that is disposed at an area in the concave part facing an upper surface of the main wing, that is accommodated between the main wing and the concave part when the slat main body is retracted into the main wing, and that suppresses turbulence colliding against the area in the concave part facing the upper surface of the main wing when the slat main body is extended from the main wing.

Document US 2012/0104180 A1 shows a Krueger, or leading edge flap, deployable from a lower aerodynamic surface of an aircraft main wing element so as to form a slot between the Krueger and the main wing element when deployed, the deployed Krueger having a leading edge, a trailing edge and upper and lower aerodynamic surfaces extending between the leading edge and the trailing edge, and a flow deflector which provides an effectively divergent flap profile thickness in the downstream direction at or adjacent the Krueger trailing edge so as to direct airflow away from the lower aerodynamic surface of the deployed Krueger towards an upper aerodynamic surface of the main wing element.

Document US 2003/0226936 A1 shows a slat selectively extending from a main wing body, with a concave rear surface of the slat facing a convex forward nose surface of the wing body, with a slat gap therebetween. At least one row of flexible bristles is movably arranged relative to the lower rear edge of the slat, to flexibly protrude up into the slat
air gap. At least one row of flexible bristles is movably arranged along the upper rear edge of the slat to extend rearwardly over the slat air gap and the upper surface of the main wing body. The flexible bristles are flexibly self-positioning and self-contouring due to the aerodynamic forces acting thereon, to improve the air flow conditions through the slat gap, separate the slat gap airflow from an entrapped eddy vortex on the concave rear surface of the slat, and thereby reduce the aerodynamic noise generated along the slat gap.

### SUMMARY

There is provided a leading edge high-lift device deployable from a wing of an aircraft, the leading edge high-lift device comprising a leading edge; a trailing edge; a lower surface and an upper surface both extending between the leading edge and the trailing edge; a trailing edge region being defined by the trailing edge and an adjacent region thereto; and a shaping device disposed at the trailing edge region, the shaping device moveable between a non-activated position and an activated position; wherein the shaping device is hingedly coupled to the lower surface at the trailing edge region, wherein the shaping device is configured to be activated via aerodynamic forces, wherein the shaping device engages a stop in the activated position.

There is provided a method of reducing noise generated at a trailing edge of a leading edge high-lift device, the method comprising deploying the leading edge high-lift device from a retracted position; and activating a shaping device disposed at a trailing edge region of the leading edge high-lift device to extend noise generation further downstream and provide wing shielding for flyover noise, wherein the shaping device is hingedly coupled to a lower surface of the leading edge high-lift device at a trailing edge region of the leading edge high-lift device, wherein the shaping device engages a stop in an activated position, and wherein activating the shaping device includes activating the shaping device via aerodynamic forces.

Further, there is provided an aircraft including the leading edge high-lift device.

The features, functions, and advantages that have been discussed can be achieved independently in various embodiments or may be combined in yet other embodiments further details of which can be seen with reference to the following description and drawings.

### BRIEF DESCRIPTION OF THE DRAWINGS

FIG. 1 is a perspective view of an illustrative aircraft;
FIG. 2 is a schematic side view, in section and with portions omitted for clarity, of an illustrative leading edge high-lift device in a deployed position relative to an aircraft wing, in accordance with an example of the present disclosure useful for understanding;
FIG. 3 is a top view of an illustrative example of a shaping device of a device trailing edge region of the leading edge high-lift device of FIG. 2;
FIG. 4 is a top view of illustrative alternative example of a shaping device of a device trailing edge region of the leading edge high-lift device of FIG. 2;
FIG. 5 is a schematic side view, in section and with portions omitted for clarity, of an embodiment of a shaping device of a device trailing edge region of the leading edge high-lift device of FIG. 2 illustrating air flow paths around such shaping device, in accordance with an embodiment of the present disclosure;
FIG. 6 is a schematic side view, in section and with portions omitted for clarity, of the illustrative shaping device of FIG. 5 in an activated position in association with a Krueger slat, in accordance with an embodiment of the present disclosure;
FIG. 7 is a schematic side view, in section and with portions omitted for clarity, of the shaping device of FIG. 6 transitioning to a non-activated position, in accordance with an embodiment of the present disclosure;
FIG. 8 is a schematic side view, in section and with portions omitted for clarity, of the illustrative shaping device of FIG. 5 in an activated position in association with a translating slat, in accordance with an embodiment of the present disclosure;
FIG. 9 is a schematic side view, in section and with portions omitted for clarity, of the illustrative shaping device of FIG. 8 transitioning to a non-activated position, in accordance with an embodiment of the present disclosure; and
FIG. 10 is an illustration of a sample sequence of steps practiced in accordance with an embodiment of the present disclosure.

### DETAILED DESCRIPTION

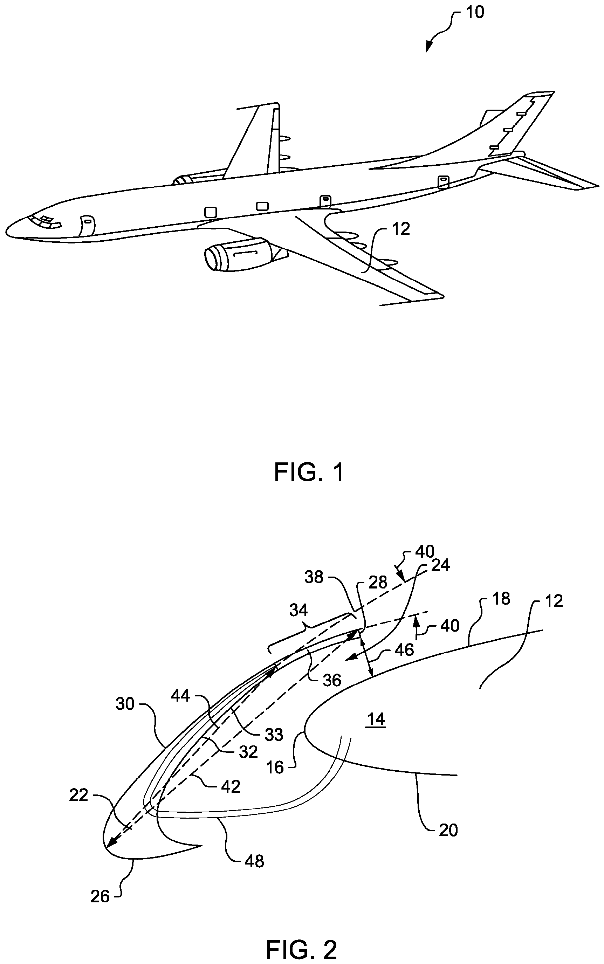

Referring now to FIG. 1, an exemplary aircraft is generally referred to by reference numeral 10. The aircraft 10 may include a wing 12. As shown in more detail in FIG. 2, the wing 12 includes a fixed wing section 14 including a wing leading edge 16, a wing upper surface 18, and a wing lower surface 20 such that the wing upper surface 18 and the wing lower surface 20 converge at the wing leading edge 16. The fixed wing section 14 may be in mechanical association with a leading edge high-lift device 22 that is moveable between a deployed position (as shown in FIG. 2) and a retracted position by various actuation mechanisms, which have been omitted from FIG. 2 for clarity. The leading edge high-lift device 22 may be a leading edge slat such as, but not limited to, a translating slotted slat or a Krueger slotted slat. With the leading edge high-lift device 22 in the deployed position, a channel 24 is formed between the fixed wing section 14 and the leading edge high-lift device 22.

The leading edge high-lift device 22 includes a device leading edge 26, a device trailing edge 28, a device upper surface 30, and a device lower surface 32. The device upper surface 30 and the device lower surface 32 extend between the device leading edge 26 and the device trailing edge 28. The device lower surface 32 may include an acoustic treatment 33 to absorb high frequency noise. A region of the leading edge high-lift device 22 adjacent to, and including, the device trailing edge 28 will be hereinafter referred to as the device trailing edge region 34. The device trailing edge region 34 is an extension that may be integral to the leading edge high-lift device 22 or may be mechanically coupled to the leading edge high-lift device 22. The device trailing edge region 34 includes a shaping device 36 activated to transition from a non-activated position to an activated position.

In an example useful for understanding, the device trailing edge region 34 may be any shape memory alloy or smart metal that is well known in the industry. Moreover, the shaping device 36 may be activated with heated such that the device trailing edge region 34 may transition to the activated position (shown in FIG. 2) from the non-activated position, as illustrated by dotted line 38. As such, the device trailing edge 28 may deflect downwardly away, in a curved profile, from the non-activated position 38 to the activated position by an angle 40. As a non-limiting example, the angle 40 may be in the approximate range of 10 to 15 degrees. When the device trailing edge region 34 is in the activated position the device trailing edge 28 is shifted aft, as compared to the leading edge high-lift device 22 without the device trailing edge region 34, so as to shield flyover noise that may be generated from the deployed leading edge high-lift device 22 while also maintaining high lift performance.

Further, the leading edge high-lift device 22 includes an extended chord 42 (illustrated as dotted lines). As a non-limiting example, the extended chord 42 may be approximately 20% longer than an abridged chord 44 (illustrated as dotted lines), which is the chord of the leading edge high-lift device 22 measured without the device trailing edge region 34. It will be appreciated, however, that the extended chord 42 may be any percentage longer than the abridged chord 44 based on specific applications. In an embodiment, the abridged chord 44 may be approximately 12% to 20% of the chord of wing 12.

When the shaping device 36 is activated such that the device trailing edge region 34 is in the activated position, a channel distance 46 may be measured between the channel 24 from the device trailing edge 28 to the fixed wing section 14. As a non-limiting example, the channel distance 46 may be in the approximate range of 4% to 14% of the extended chord 42.

A retractable conduit 48 may retractably couple the fixed wing section 14 to the shaping device 36 of the leading edge high-lift device 22. The conduit 48 may selectively deliver heat to activate the shaping device 36, such as, but not limited to, a shape metal actuator. As non-limiting examples, the conduit 48 may route hot air from an anti-icing system of the fixed wing section 14 to apply heat to the shaping device 36 or may include wiring from the fixed wing section 14 to provide electric heating to the shaping device 36. When the leading edge high-lift device 22 is in the deployed position, the shaping device 36 may be activated by applying heat thereto via the conduit 48 such that the shaping device 36 deflects downward by angle 40, in a substantially curved profile, towards the fixed wing section 14 until reaching the activated position. Before the leading edge high-lift device 22 transitions back to the retracted position, the shaping device 36 may be deactivated by removing the heat from the shaping device 36 such that the device trailing edge region 34 reverts back to the non-activated position, by restoring loads acted thereupon or by a second shaping device 36 activated to restore to the non-activated position, when the leading edge high-lift device 22 transitions back to the retracted position.

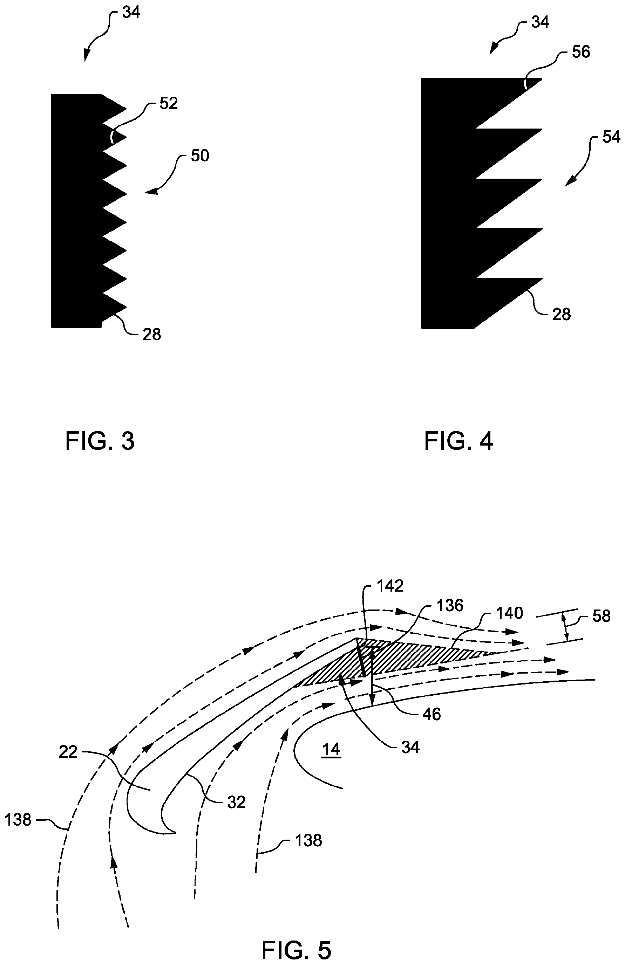

In an embodiment illustrated in FIG. 3, the device trailing edge region 34 may include a device trailing edge 28 including a serrated profile 50. In an embodiment, the serrated profile 50 may be contiguous triangles such that each triangle includes a trailing edge closure angle or serrated profile angle 52, which may be in the approximate range of 30 to 60 degrees, at the device trailing edge 28. The serrated profile 50 of the device trailing edge 28 may extend the distribution of the trailing edge pressure differential distance aftward such that the intensity of the vortices, and thereby the noise source strength, may be extended aft such that the fixed wing section 14 shields the flyover noise.

In an alternative embodiment illustrated in FIG. 4, the device trailing edge region 34 may include a device trailing edge 28 including a saw tooth profile 54. In an embodiment, the saw tooth profile 54 may be contiguous right angle triangles such that each right angle triangle includes a saw tooth profile angle 56, which may be, but not limited to, approximately 30 degrees, at the device trailing edge 28. The saw tooth profile 54 of the device trailing edge 28 may extend the noise generation further downstream to provide increased wing shielding for flyover noise.

Referring to FIG. 5, the device trailing edge region 34 includes a shaping device 136 hingedly coupled to the device lower surface 32 in the device trailing edge region 34. When the leading edge high-lift device 22 is in the deployed position, as illustrated, the shaping device 136 is activated by aerodynamic forces to transition from a non-activated, stowed position to an activated position. Although not illustrated to scale, in an embodiment, the shaping device 136 may extend downward into the separated circulating airflow 138 at a shaping distance 58, which may be, but not limited to, approximately 2% to 5% of the channel distance 46. With the shaping device 136 in the activated position, the separated circulating airflow 138 around the shaping device 136 may form a virtual body 140 (illustrated in dotted lines in FIG. 5), creating a virtual extension of the device trailing edge 28, to maintain high lift performance, eliminate high intensity noise from the device trailing edge 28, and extend the noise generation further downstream to provide increased wing shielding for flyover noise.

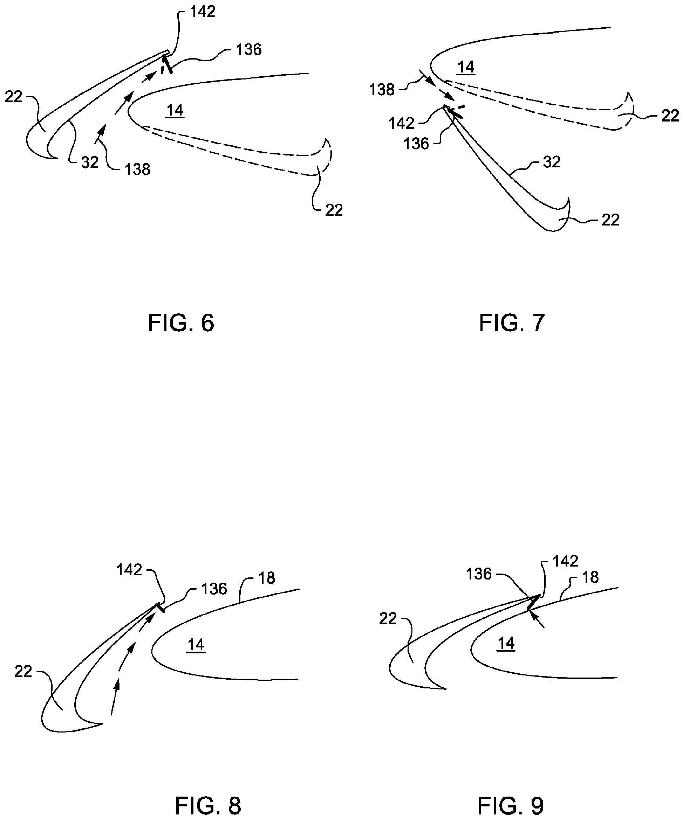

As one detailed example, the shaping device 136 may be utilized in association with a leading edge high-lift device 22 such as the Krueger slat illustrated in FIGS. 6 and 7. As illustrated in FIG. 6, the leading edge high-lift device 22 is in the deployed position such that the airflow 138 forces the shaping device 136, in the non-activated, stowed position, to hingedly move outwardly away from the device lower surface 32 to the activated position, where the shaping device 136 is prevented from further movement by stop 142. As illustrated in FIG. 7, when the leading edge high-lift device 22 transitions back to the retracted position (shown in dotted lines in FIGS. 6 and 7), the airflow 138 forces the shaping device 136 to hingedly move back to the non-activated, stowed position.

In another detailed example, the shaping device 136 may be utilized in association with a leading edge high-lift device 22 such as the translating slat illustrated in FIGS. 8 and 9. With the leading edge high-lift device 22 translated to the deployed position, as illustrated in FIG. 8, the airflow 138 similarly forces the shaping device 136 to hingedly move into the activated position against stop 142. As illustrated in FIG. 9, when the leading edge high-lift device 22 transitions back to the retracted position, the shaping device 136 comes into physical contact with the wing upper surface 18 such that the shaping device 136 is forced into the non-activated, stowed position.

In an alternative embodiment, the shaping device 136 may be spring loaded.

### INDUSTRIAL APPLICABILITY

Based on the foregoing, it can been seen that the present disclosure sets forth a shaping device of a leading edge high-lift device for reducing noise while maintaining aerodynamic efficiency. Moreover, the shaping device may maintain high lift performance while reducing noise source intensity by shifting the noise generation aft to reduce flyover noise. In operation, the leading edge high-lift device 22 may be deployed to increase the lift capabilities of the aircraft 10. With the leading edge high-lift device 22 in the deployed position, the shaping device 36, 136 may be activated to reduce trailing edge noise.

As one illustrative example useful for understanding, the shaping device 36 may be activated by applying heat, either hot airflow or electric heating, via the conduit 48 such that the device trailing edge region 34, while extended aft of the wing leading edge 16, deflects downward, in a substantially curved profile, towards the fixed wing section 14 until reaching the activated position. The extended, substantially curved profile of the device trailing edge region 34 may create a converging flow area that reduces the line of sight noise propagation such that the strength of the vortices at the device trailing edge 28 are reduced thereby also reducing noise generation. Moreover, in alternative embodiments, the device trailing edge region 34 may include a device trailing edge 28 with either a serrated profile or a saw tooth profile to further reduce the noise source strength such that the distribution of the trailing edge pressure differential distance may be extended aftward to reduce intensity of the vortices and provide increased wing shielding for flyover noise. Before the leading edge high-lift device 22 transitions back to the retracted position, the shaping device 36 may be deactivated by removing the heat from the shaping device 36 such that the device trailing edge region 34 reverts back to the non-activated position when the leading edge high-lift device 22 is retracted.

The shaping device 136 is activated by aerodynamic forces, from the non-activated, stowed position, to hingedly move outwardly away from the device lower surface 32 to the activated position, where the shaping device 136 is prevented from further movement by stop 142. With the shaping device 136 in the activated position, the separated circulating airflow 138 around the shaping device 136 may form a virtual body 140 that extends the noise generation further downstream producing increased wing shielding for flyover noise, thereby reducing noise source strength. When the leading edge high-lift device 22 transitions back to the retracted position, in one embodiment, the airflow 138 forces the shaping device 136 to hingedly move back to the non-activated, stowed position, and in another embodiment, the shaping device 136 comes into physical contact with the wing upper surface 18 such that the shaping device 136 is forced into the non-activated, stowed position.

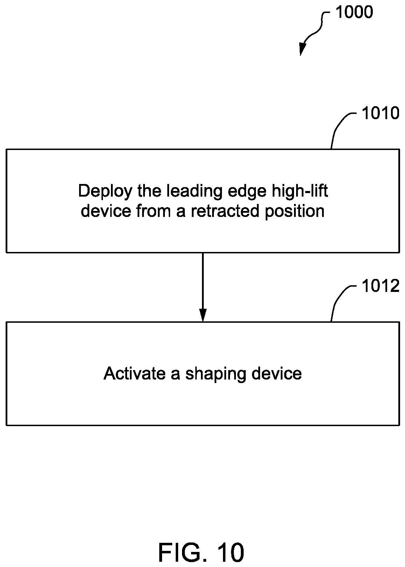

FIG. 10 illustrates a sample sequence of steps which is practiced to reduce noise generated at a trailing edge of a leading edge high-lift device while maintaining aerodynamic efficiency. Box 1010 illustrates deploying the leading edge high-lift device from a retracted position. Another step, as illustrated in box 1012, may be activating a shaping device disposed at a trailing edge region of the leading edge high-lift device to extend noise generation further downstream and provide wing shielding for flyover noise. The step of activating the shaping device may include another alternative step of activating the shaping device via aerodynamic forces.

## Claims

1. A leading edge high-lift device (22) deployable from a wing (12) of an aircraft (10), the leading edge high-lift device (22) comprising:
a leading edge (26);
a trailing edge (28);
a lower surface (32) and an upper surface (30) both extending between the leading edge and the trailing edge;
a trailing edge region (34) being defined by the trailing edge and an adjacent region thereto; and
a shaping device (136) disposed at the trailing edge region, the shaping device moveable between a non-activated position and an activated position;
wherein the shaping device (136) is hingedly coupled to the lower surface (32) at the trailing edge region (34), **characterized in that** the shaping device (136) is configured to be activated via aerodynamic forces, wherein the shaping device (136) engages a stop (142) in the activated position.

2. The leading edge high-lift device of claim 1, wherein the trailing edge (28) includes a saw tooth profile.

3. The leading edge high-lift device of claim 1, wherein the trailing edge (28) includes a serrated profile.

4. The leading edge high-lift device of any of claims 1 to 3, wherein the lower surface (32) includes an acoustic treatment.

5. The leading edge high-lift device of any of claims 1 to 4, wherein the shaping device is spring loaded.

6. The leading edge high-lift device of any of claims 1 to 5, wherein leading edge high-lift device (22) is a Krueger slat.

7. The leading edge high-lift device of any of claims 1 to 6, wherein leading edge high-lift device (22) is a translating slat.

8. An aircraft (10) including a leading edge high-lift device (22) according to any of claims 1 to 7.

9. A method (1000) of reducing noise generated at a trailing edge (28) of a leading edge high-lift device (22), the method comprising:
deploying (1010) the leading edge high-lift device (22) from a retracted position; and
activating (1012) a shaping device (136) disposed at a trailing edge region (34) of the leading edge high-lift device (22) to extend noise generation further downstream and provide wing shielding for flyover noise, wherein the shaping device (136) is hingedly coupled to a lower surface (32) of the leading edge high-lift device (22) at a trailing edge region (34) of the leading edge high-lift device (22), **characterized in that** the shaping device (136) engages a stop in an activated position, and wherein activating the shaping device (136) includes activating the shaping device (136) via aerodynamic forces.

## Patentansprüche

1. Vorderkanten-Hochauftriebseinrichtung (22), die von einem Flügel (12) eines Flugzeugs (10) aus ausbringbar ist, wobei die Vorderkanten-Hochauftriebseinrichtung (22) Folgendes aufweist:
eine Vorderkante (26);
eine Hinterkante (28);
eine Unterfläche (32) und eine Oberfläche (30), die sich beide zwischen der Vorderkante und der Hinterkante erstrecken;
einen Hinterkantenbereich (34), der durch die Hinterkante und einen benachbarten Bereich dazu definiert ist; und
eine Formungseinrichtung (136), die an dem Hinterkantenbereich angeordnet ist, wobei die Formungseinrichtung zwischen einer nicht aktivierten Position und einer aktivierten Position bewegbar ist; wobei die Formungseinrichtung (136) schwenkbar mit der Unterfläche (32) an dem Hinterkantenbereich (34) gekoppelt ist, **dadurch gekennzeichnet, dass** die Formungseinrichtung (136) dazu konfiguriert ist, über aerodynamische Kräfte aktiviert zu werden, wobei die Formungseinrichtung (136) in der aktivierten Position in ein Stoppelement eingreift.

2. Vorderkanten-Hochauftriebseinrichtung nach Anspruch 1, wobei die Hinterkante (28) ein Sägezahnprofil aufweist.

3. Vorderkanten-Hochauftriebseinrichtung nach Anspruch 1, wobei die Hinterkante (28) ein gezacktes Profil aufweist.

4. Vorderkanten-Hochauftriebseinrichtung nach einem der Ansprüche 1 bis 3, wobei die Unterfläche (32) eine Lärmbehandlung aufweist.

5. Vorderkanten-Hochauftriebseinrichtung nach einem der Ansprüche 1 bis 3, wobei die Formungseinrichtung (36) federgespannt ist.

6. Vorderkanten-Hochauftriebseinrichtung nach einem der Ansprüche 1 bis 5, wobei die Vorderkanten-Hochauftriebseinrichtung (22) ein Krueger-Vorderflügel ist.

7. Vorderkanten-Hochauftriebseinrichtung nach einem der Ansprüche 1 bis 6, wobei die Vorderkanten-Hochauftriebseinrichtung (22) ein verschiebbarer Vorderflügel ist.

8. Luftfahrzeug (10) mit einer Vorderkanten-Hochauftriebseinrichtung (22) nach einem der Ansprüche 1 bis 7.

9. Verfahren (1000) zum Reduzieren der an einer Hinterkante (28) einer Vorderkanten-Hochauftriebseinrichtung (22) erzeugten Lärms, wobei das Verfahren Folgendes aufweist:
Ausbringen (1010) der Vorderkanten-Hochauftriebseinrichtung (22) aus einer zurückgezogenen Position; und
Aktivieren (1012) einer Formungseinrichtung (136), die an einem Hinterkantenbereich (34) der Vorderkanten-Hochauftriebseinrichtung (22) angeordnet ist, um eine Lärmerzeugung weiter stromabwärts zu erstrecken und eine Flügelabschirmung für Überfluglärm bereitzustellen, wobei die Formungseinrichtung (136) schwenkbar mit einer Unterfläche (32) der Vorderkanten-Hochauftriebseinrichtung (22) einem Hinterkantenbereich (34) der Vorderkanten-Hochauftriebseinrichtung (22) gekoppelt ist, **dadurch gekennzeichnet, dass** die Formungseinrichtung (136) in ein Stoppelement in einer aktivierten Position eingreift, und wobei das Aktivieren der Formungseinrichtung (136) das Aktivieren der Formungseinrichtung (136) über aerodynamische Kräfte aufweist.

## Revendications

1. Dispositif hypersustentateur de bord d'attaque (22) se déployant depuis une aile (12) d'un aéronef (10), le dispositif hypersustentateur de bord d'attaque (22) comprenant :
un bord d'attaque (26) ;
un bord de fuite (28) ;
une surface inférieure (32) et une surface supérieure (30) s'étendant toutes deux entre le bord d'attaque et le bord de fuite ;
une zone de bord de fuite (34) étant définie par le bord de fuite et une zone adjacente à celui-ci ; et
un dispositif de mise en forme (136) disposé au niveau de la zone de bord de fuite, le dispositif de mise en forme étant déplaçable entre une position non activée et une position activée ;
dans lequel le dispositif de mise en forme (136) est couplé de façon articulée à la surface inférieure (32) au niveau de la zone de bord de fuite (34), **caractérisé en ce que** le dispositif de mise en forme (136) est configuré pour être activé par le biais de forces aérodynamiques, le dispositif de mise en forme (136) engageant une butée (142) dans la position activée.

2. Dispositif hypersustentateur de bord d'attaque selon la revendication 1, dans lequel le bord de fuite (28) comprend un profil en dents de scie.

3. Dispositif hypersustentateur de bord d'attaque selon la revendication 1, dans lequel le bord de fuite (28) comprend un profil dentelé.

4. Dispositif hypersustentateur de bord d'attaque selon l'une quelconque des revendications 1 à 3, dans lequel la surface inférieure (32) comprend un traitement acoustique.

5. Dispositif hypersustentateur de bord d'attaque selon l'une quelconque des revendications 1 à 4, dans lequel le dispositif de mise en forme est chargé par ressorts.

6. Dispositif hypersustentateur de bord d'attaque selon l'une quelconque des revendications 1 à 5, le dispositif hypersustentateur de bord d'attaque (22) étant une lamelle Krueger.

7. Dispositif hypersustentateur de bord d'attaque selon l'une quelconque des revendications 1 à 6, le dispositif hypersustentateur de bord d'attaque (22) étant une lamelle de translation.

8. Aeronéf (10) comprenant un dispositif hypersustentateur de bord d'attaque (22) selon l'une quelconque des revendications 1 à 7.

9. Méthode (1000) pour réduire le bruit généré au niveau d'un bord de fuite (28) d'un dispositif hypersustentateur de bord d'attaque (22), la méthode comprenant :
le déploiement (1010) du dispositif hypersustentateur de bord d'attaque (22) depuis une position rétractée ; et
l'activation (1012) d'un dispositif de mise en forme (136) disposé au niveau d'une zone de bord de fuite (34) du dispositif hypersustentateur de bord d'attaque (22) pour étendre la génération de bruit plus loin en aval et pour fournir une protection de l'aile contre le bruit de survol, le dispositif de mise en forme (136) étant couplé de façon articulée à une surface inférieure (32) du dispositif hypersustentateur de bord d'attaque (22) au niveau d'une zone de bord de fuite (34) du dispositif hypersustentateur de bord d'attaque (22),
**caractérisée en ce que** le dispositif de mise en forme (136) engage une butée dans une position activée, et l'activation du dispositif de mise en forme (136) comprenant l'activation du dispositif de mise en forme (136) par le biais de forces aérodynamiques.
